# EUROPÄISCHE PATENTSCHRIFT

(11) **EP 2 997 210 B1**
(45) Veröffentlichungstag und Bekanntmachung des Hinweises auf die Patenterteilung: **11.10.2017**
(21) Anmeldenummer: 14733968.3
(22) Anmeldetag: 16.04.2014
(51) Int. Cl.: E05B 81/06, E05B 85/02, H02K 7/08, H02K 7/116

(54) **KLEINSTANTRIEB FÜR AUTOMOBILSCHLÖSSER MIT AXIALANSCHLAG FÜR DIE MOTORACHSE**
MINIATURE DRIVE FOR CAR LOCKS WITH AN AXIAL STOP FOR THE MOTOR SPINDLE
MICROMOTEURS POUR SERRURES D'AUTOMOBILE MUNIES D'UNE BUTÉE AXIALE POUR L'AXE DE MOTEUR

(30) Priorität: 26.04.2013 DE 102013007272
(43) Veröffentlichungstag der Anmeldung: 23.03.2016
(73) Patentinhaber: Kiekert Aktiengesellschaft, 42579 Heiligenhaus (DE)
(72) Erfinder: REDDMANN, Uwe, 45145 Essen (DE)
(86) Internationale Anmeldenummer: PCT/DE2014/000198
(87) Internationale Veröffentlichungsnummer: WO 2014/173387

(56) Entgegenhaltungen:
- EP-A1- 0 394 512
- EP-A2- 2 182 148
- US-A- 5 564 308

## Beschreibung

Die Erfindung betrifft einen Kleinstantrieb, vorzugsweise elektrischen Kleinstantrieb für Automobilschlösser wie Seitentürschlösser, Heckschlösser oder Zuziehhilfen mit einem den Kleinstantrieb sowie ein Schneckengetriebe aufnehmenden Gehäuse, bestehend aus Gehäusekasten und Gehäusedeckel, wobei die Motorachse des Kleinstantriebes über eine Lagerbohrung am Gehäuse abgestützt und dort über einen Axialanschlag gesichert ist.

Bei derartigen Kleinstantrieben, die bevorzugt in Schlössern, Seitentürschlössern, Heckschlössern oder Zuziehhilfen eingesetzt werden, werden die Motoren in einem Gehäuse gelagert, wobei sich die Motorachse am Gehäuse bzw. einer dafür vorgesehenen Stegwandung zumindest axial abstützt. Aus der EP 0 133 527 B2 ist eine Anordnung bekannt, mit der die Welle bzw. die Antriebsachse eines derartigen Kleinstantriebes gleitgelagert wird. Die Spitze dieser Motorachse ist in einer Scheibe gelagert, die wohl gleichzeitig als Axialanschlag angesehen werden kann. Auch bei der EP 0 394 512 A1 dient eine solche Scheibe zur Lagerung bzw. zur Begrenzung des Einschubweges der Motorachse, wobei in beiden Fällen für die Anordnung der Scheibe und der ergänzenden Abstützung aufwendige Maßnahmen erforderlich sind. Ähnlich ist auch bei der EP 1 101 652 B1 das Axialspiel der Motorachse begrenzt, wobei diese Axialbegrenzung einer gesondert Einschraub- oder Einsteckvorrichtung bedarf, was einen zusätzlichen Aufwand bei der Herstellung des Gehäuses erfordert. Schließlich zeigt die EP 0 764 099 B1 einen entsprechenden elektrischen Antriebsmotor, wobei hier die Motorachse bzw. deren Spitze in einer Art Stopfen gelagert ist, der gleichzeitig auch zur Begrenzung des Axialweges der Motorachse dienen soll. Statt dieses Stopfens wird auch ein blattartiges Federelement eingesetzt, das einer besonderen Fixierung im Gehäuse bedarf. All diesen verschiedenen Lagerungen der Motorachse ist gemeinsam, dass die für die Lagerung der Motorachse erforderlichen Bauteile entweder einen gesonderten Arbeitsschritt bei der Herstellung erfordern, ein gesondertes Bauteil darstellen, die an entsprechenden Stellen des Gehäuses festgelegt werden müssen bzw. bei denen während des Spritzgießens des Gehäuses bzw. hier des Gehäusekastens entsprechende zylinderförmige Schieber im Werkzeug vorgesehen werden müssen, die von der Gehäuseinnenseite aus anzuordnen sind. Das erfordert werkzeugtechnisch einen hohen Aufwand, sodass der Motor insgesamt nur schwer montierbar ist und darüber hinaus auch noch gesonderte Maßnahmen erforderlich sind, um die genaue Position des Kleinstantriebes zu gewährleisten.

Ein gattungsgemäßer Kleinstantrieb ist in EP 2 182 148 A offenbart.

Der Erfindung liegt daher die Aufgabe zu Grunde, die Montage des Kleinstantriebes deutlich zu erleichtern und eine immer präzise Positionierung im Gehäuse zu sichern.

Die Aufgabe wird gemäß der Erfindung dadurch gelöst, dass der der Lagerbohrung oder sonstigen Halterung zugeordnete Axialanschlag von dem Gehäusedeckel und die Lagerbohrung von der Außenseite des Gehäusekastens her erzeugt ist.

Dadurch dass der der Lagerbohrung zugeordnete Axialanschlag nicht im Gehäusekasten angeordnet werden muss, kann die notwendige Lagerbohrung problemlos von der Außenseite des Gehäusekastens her erzeugt werden. Der Axialanschlag selber ist dem Gehäusedeckel zugeordnet, der also erst zum Tragen oder zum Einsatz kommt, wenn der Gehäusedeckel auf den Gehäusekasten aufgesetzt wird, also zum Zeitpunkt der Endmontage. Vorteilhaft ist darüber hinaus, dass der Kleinstantrieb bzw. der entsprechende Motor nun einfach eingelegt und axial verschoben werden kann, um dann durch die Axialanschläge festgelegt zu werden und eine immer gleiche Position einzuhalten.

Nach einer zweckmäßigen Ausbildung der Erfindung ist vorgesehen, dass der Axialanschlag der Motorachse und der Motoraxialanschlag dem Gehäusedeckel zugeordnet sind. Hier ist also klargestellt, dass beide Axialanschläge, die zur Festlegung des Motors des Kleinstantriebes notwendig sind, nun erst beim Aufsetzen des Gehäusedeckels wirksam werden, sodass die übrigen zur Fixierung des Motors notwendigen Vorbereitungsarbeiten ohne Behinderung durch diese Axialanschläge vorgenommen werden können.

Die immer gleiche Positionierung der Axialanschläge am bzw. im Gehäusedeckel wird dadurch gewährleistet, dass die Axialanschläge mit dem Gehäusedeckel eine Baueinheit bildend ausgeführt sind. Sie werden also beim Spritzen des Gehäusedeckels gleich mit erzeugt, sodass ihre immer gleiche Anordnung und Ausbildung gewährleistet werden kann.

Während beim Stand der Technik der zylinderförmige Schieber vom Innenraum des Gehäusekastens her wirksam werden muss, sieht die Erfindung vor, dass die Lagerbohrung während des Spritzgießens des Gehäusekastens mittels eines zylinderförmigen Schiebers im Werkzeug von der Außenseite des Gehäusekastens erzeugt ist. Auf diese Weise kann die notwendige Lagerbohrung bzw. der notwendige Durchbruch viel einfacher hergestellt werden und es ist durch die einfachere Positionierung auch gesichert, dass die Ausformung der Lagerbohrung und des Durchbruches sowohl von der Positionierung wie auch der Ausbildung her immer gleich gehalten sind.

Weiter vorne ist darauf hingewiesen worden, dass die Axialanschläge, d. h. also sowohl der der Lagerbohrung zugeordnete Axialanschlag wie auch der Motoraxialanschlag erst beim Aufsetzen des Gehäusedeckels wirksam werden. Um hier eine genaue Führung und damit auch Positionierung sicherzustellen, ist vorgesehen, dass die Axialanschläge als einen Steg des Gehäusekastens umfassender Doppelsteg oder Doppelformteil ausgebildet sind. Dabei wirkt natürlich nur der Teil dieses Doppelsteges als Axialanschlag, der dem Motor bzw. der Motorachse zugeordnet ist. Der andere Teil des Steges dient der sicheren Einführung und Positionierung und zusätzlichen Abstützung beim zusammengesetzten Gehäuse.

Weiter sieht die Erfindung bevorzugt vor, dass die Axialanschläge über die korrespondierenden Stege von Gehäusekasten und Gehäusedeckel und letztere verbindende Halteschrauben gesichert sind. Dies bedeutet, dass bereits beim Aufsetzen des Gehäusedeckels die Axialanschläge ihre Position einnehmen, wobei über die verbindenden Halteschrauben diese Position dann gesichert wird, weil Gehäusekasten und Gehäusedeckel über diese Halteschrauben miteinander verbunden sind.

Um das Einschieben der Doppelstege um den Steg im Gehäusekasten zu erleichtern und den immer gleichen Sitz zu gewährleisten, sieht die Erfindung bevorzugt vor, dass die den Axialanschlag im Bereich der Lagerbohrung aufnehmende Ausnehmung über angeschrägte Kanten verfügend ausgebildet ist. Damit wird eine Art Einführtrichter vorgegeben, in den der entsprechende Steg bzw. Axialanschlag eingeschoben wird, sodass damit gleichzeitig auch der Motoraxialanschlag mit in die richtige Position gebracht werden kann. Es bedarf keiner gesonderten Maßnahmen oder einer besonderen Obacht bei dieser Arbeit, weil der Axialanschlag automatisch in die richtige Position hineinrutscht.

Um für die Motorachse eine gewisse Vorspannung zu gewährleisten bzw. den gesamten Kleinstantrieb in seiner Position genau zu fixieren, ist vorgesehen, dass die der Spitze der Motorachse zugewandte Seite des Axialanschlages eine einen Keil vorgebende Schräge aufweisend ausgebildet ist. Mit dem Einschieben des Axialanschlages bzw. des entsprechenden Steges in die Ausnehmung wird somit die Spitze der Motorachse in Richtung Motoraxialanschlag verschoben, sodass damit eine gewisse Vorspannung erreicht werden kann.

Die genannte Vorspannung kann noch weiter dadurch unterstützt werden, dass der Axialanschlag einen eine Federwirkung ergebenden Längsspalt aufweist. Damit ist die Möglichkeit gegeben, wenn auch nur begrenzt, die Motorachse mit entsprechendem Andruck in eine solche Position hineinzubringen. Je nach Ausbildung des Längsspaltes kann die Federwirkung beeinflusst werden.

Einen immer gleichen Sitz der Motorachse und damit gleichzeitig auch eine sichere Führung wird weiter dadurch unterstützt, dass die der Spitze der Motorachse zugeordnete Seite des Axialanschlages eine die Spitze der Motorachse aufnehmende Mulde aufweist.

Die Erfindung zeichnet sich insbesondere dadurch aus, dass insbesondere für elektrische Kleinstantriebe, die in Automobilschlössern eingesetzt werden sollen, die Herstellung insbesondere der benötigten Axialanschläge wesentlich vereinfacht ist. Die Axialanschläge, d. h. der auf die Motorachse einwirkende Axialanschlag und der eigentliche Motoraxialanschlag sind dem Gehäusedeckel zugeordnet und Teile des Gehäusedeckels, sodass sie bei der Herstellung der Lagerbohrung und des Durchbruches für die Lagerbohrung keine Behinderung darstellen. Dadurch wird es möglich, die Lagerbohrung und den notwendigen Durchbruch von der Außenseite des Gehäusekastens her zu erzeugen, insbesondere beim Spritzgießen des Gehäusekastens. Die benötigten Axialanschläge sind dann zweckmäßigerweise Teil des Gehäusedeckels, werden also beim Spritzgießen des Gehäusedeckels mit erzeugt, sodass sie bei Auflegen des Gehäusedeckels auf den Gehäusekasten durch ihre Anordnung und ihre Formgebung zwangsweise in die Anschlagsposition für Motor und Motorachse hineinbewegt werden. Es sind keine besonderen Maßnahmen dafür erforderlich, insbesondere dann, wenn die für die Aufnahme der Axialanschläge bzw. insbesondere des für die Lagerbohrung vorgesehenen Axialanschlages Ausnehmungen aufweisen, die trichterförmig ausgebildet werden. Der entsprechende Axialanschlag bzw. der ihn bildende Steg im Gehäusedeckel wird dann in die optimale Position hineingeführt und dann auch dort gehalten, insbesondere über die einfachen dann anzubringenden Halteschrauben.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: eine Teildraufsicht auf den Kleinstantrieb,
- Figur 2: eine Seitenansicht des Kleinstantriebes mit in den Gehäusekasten bereits eingelegtem Motor,
- Figur 3: den Kleinstantrieb mit bereits in die Lagerbohrung eingeschobene Motorachse,
- Figur 4: einen Gehäusekasten mit aufgesetztem Gehäusedeckel und damit beidseitig über einen Axialanschlag gehaltenen Kleinstantrieb (Motor),
- Figur 5: die in Figur 4 gezeigte Arbeitsposition in Schrägstellung mit Halteschrauben,
- Figur 6: eine vergrößerte Wiedergabe der Einbauposition nach Einschieben der Motorachse in die Lagerbohrung,
- Figur 7: die aus Figur 6 ersichtliche Position des Kleinstantriebes mit aufgelegtem Gehäusedeckel und damit Einschieben des für die Motorachse vorgesehenen Axialanschlages und
- Figur 8: eine schematisiert wiedergegebene Position mit einem eine Schräge aufweisenden Axialanschlag vor der Motorachse.

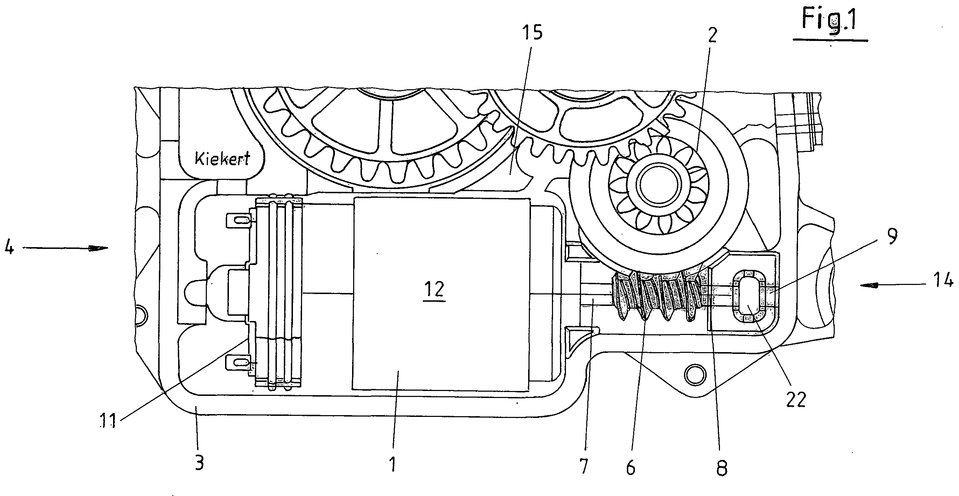

Figur 1 zeigt eine Draufsicht auf einen Kleinstantrieb 1, wobei hier das Gehäuse 3 geöffnet dargestellt ist. Dadurch kann man das innenliegende Schneckengetriebe 2 sowie den Kleinstantrieb 1 klar erkennen. Der Kleinstantrieb 1 liegt in einer entsprechenden Mulde des Gehäusekastens 4, wobei seine Motorachse 7 mit der Schneckenwelle 6 in das Schneckengetriebe 2 eingreifen kann. Die Spitze der Motorachse 7 ist in eine Lagerbohrung eingeschoben, die von der Außenseite 14 hergestellt ist und über einen entsprechenden Durchbruch 9 problemlos erreicht und erzeugt werden kann. Der notwendige Axialanschlag ist hier noch nicht eingebracht, wobei er in die mit 22 bezeichnete Ausnehmung von oben her eingeschoben werden muss. Der notwendige Motoraxialanschlag ist mit 11 am der Motorachse 7 gegenüberliegenden Ende des Motorgehäuses 12 angedeutet. Im Gehäusekasten 4 sind entsprechende Teilräume vorgegeben, die den Innenraum 15 des Gehäusekastens 4 unterteilen und für die Aufnahme der verschiedenen Räder des Schneckengetriebes 2 sowie des Motorgehäuses vorgesehen ausgebildet sind.

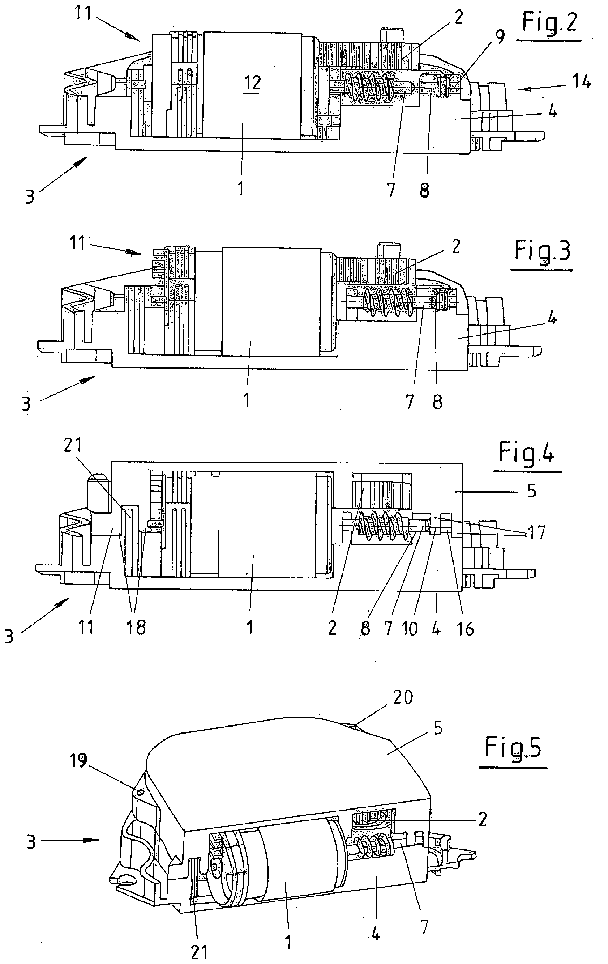

Figur 2 zeigt eine Seitenansicht des Kleinstantriebes 1 mit dem Gehäuse 3, wobei hier wiederum das Schneckengetriebe 2 und auch das Motorgehäuse 12 erkennbar sind. Das Motorgehäuse 12 ist in eine entsprechende Ausnehmung des Innenraums 15 eingelegt und kann in Richtung auf die Lagerbohrung 8 verschoben werden. Um dabei die entsprechende Position zu wahren, müssen an beiden Seiten Axialanschläge 10 und 11 vorgesehen werden, die hier aber noch nicht erkennbar und vorhanden sind, weil sie dem nicht dargestellten Gehäusedeckel 5 zugeordnet werden.

Nach Erreichen der Position nach Figur 2 kann nun das Motorgehäuse 12 in Richtung auf die Lagerbohrung 8 verschoben werden, bis die Motorachse 7 mit ihrem vorderen Teil in der Lagerbohrung 8 voll abgestützt ist. Dies ist in Figur 3 gezeigt. Um nun die erreichte Position des Kleinstantriebes 1 bzw. des Motorgehäuses 12 und Motorachse 7 zu gewährleisten, wird der Gehäusedeckel 5 aufgesetzt, was in Figur 4 verdeutlicht ist. Erkennbar ist, dass eine im Gehäusekasten 4 ausgebildeter Steg 16 für den Doppelsteg 17 des Gehäusedeckels 5 als Führung dient, sodass der als Axialanschlag 10 dienende Doppelsteg 17 immer die genaue Position erreicht, die er für eine sichere Abstützung und Positionierung des Kleinstantriebes benötigt. Auf der gegenüberliegenden Seite des Gehäuses 3 bzw. des Gehäusedeckels 5 ist auch der Motoraxialanschlag 11 wiedergegeben, der ebenfalls als Doppelsteg 18 ausgebildet ist und beim Aufschieben den Steg 21 im Gehäusekasten 4 umfasst und damit auch immer die gleiche Position einnimmt. Figur 4 und Figur 5 verdeutlichen, dass nach dem Aufsetzen des Gehäusedeckels 5 auf den Gehäusekasten 4 die genaue Positionierung des Motorgehäuses 12 mit der Motorachse 7 dadurch gesichert wird, dass auf zwei Seiten des Gehäuses 3 vorgesehene Halteschrauben 19 eingeschraubt werden.

Das einfache und sichere Einführen des als Doppelsteg 17 ausgebildeten Axialanschlages 10 wird dadurch erleichtert, dass die Ausnehmung 22 im Gehäusekasten 4 abgeschrägte Kanten 23, 24 aufweist. Dadurch entsteht eine Art Einführtrichter 25, der den aufgesetzten Gehäusedeckel 5 mit den entsprechenden Doppelstegen 17, 18 zwangsweise in die richtige Position führt.

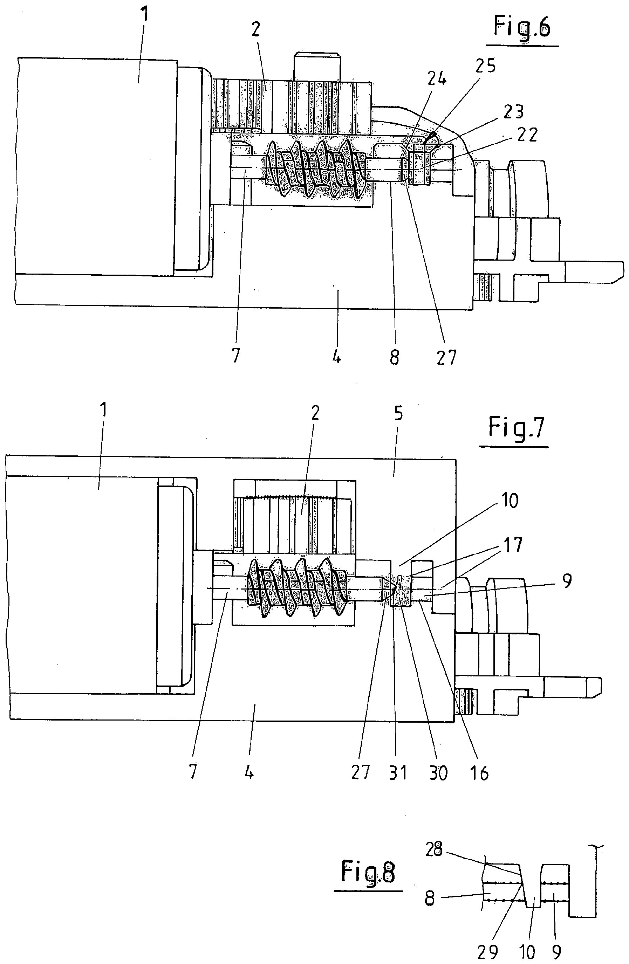

Während nach Figur 6 der Gehäusedeckel 5 noch nicht aufgesetzt ist, zeigt Figur 7 die entsprechende weitere Position, wobei das Axialspiel des Motorgehäuses 12 über den Motoraxialanschlag 11 (hier nicht wiedergegeben) und den der Motorachse 7 zugeordneten Axialanschlag 10 wirksam begrenzt bzw. weitgehend verhindert ist.

Nach Figur 7 ist auf der Seite 28 des Axialanschlages 10 eine Mulde 31 vorgesehen, die die entsprechende Spitze 27 der Motorachse 7 aufnimmt und so sicher führt. Außerdem weist der entsprechende Teil des Doppelsteges 17 einen Längsspalt 30 auf, über den die entsprechende Axialbewegung des Motorgehäuses 12 federnd abgestützt werden kann.

Figur 8 schließlich zeigt eine besondere Ausbildung des als Axialanschlag 10 dienenden Teils des Doppelsteges 17, wobei hier die Seite 28 eine Schräge 29 aufweist, sodass beim Einschieben in die Ausnehmung 22 eine Art Verspannung des Motorgehäuses 12 mit der Motorachse 7 erreicht werden kann.

## Patentansprüche

1. Kleinstantrieb, vorzugsweise elektrischer Kleinstantrieb (1) für Automobilschlösser wie Seitentürschlösser, Heckschlösser oder Zuziehhilfen mit einem Motorgehäuse (12), einer Motorachse (7) und einem das Motorgehäuse (12) und die Motorachse (7) sowie ein Schneckengetriebe (2) aufnehmenden Gehäuse (3), bestehend aus Gehäusekasten (4) und Gehäusedeckel (5), **dadurch gekennzeichnet, dass** die Motorachse (7) über eine Lagerbohrung (8) am Gehäusekasten (4) abgestützt und dort über einen Axialanschlag (10) gesichert ist, und, dass der der Lagerbohrung (8) zugeordnete Axialanschlag (10) von dem Gehäusedeckel (5) und die Lagerbohrung (8) von der Außenseite (14) des Gehäusekastens (4) her erzeugt ist.

2. Kleinstantrieb nach Anspruch 1,
**dadurch gekennzeichnet,**
**dass** der Axialanschlag (10) der Motorachse (7) und der Motoraxialanschlag (11) dem Gehäusedeckel (5) zugeordnet sind.

3. Kleinstantrieb nach einem der vorhergehenden Ansprüche,
**dadurch gekennzeichnet,**
**dass** die Axialanschläge (10, 11) mit dem Gehäusedeckel (5) eine Baueinheit bildend ausgeführt sind.

4. Kleinstantrieb nach Anspruch 1,
**dadurch gekennzeichnet,**
**dass** die Lagerbohrung (8) während des Spritzgießens des Gehäusekastens (4) mittels eines zylinderförmigen Schiebers im Werkzeug von der Außenseite (14) des Gehäusekastens (4) erzeugbar ist.

5. Kleinstantrieb nach einem der vorhergehenden Ansprüche,
**dadurch gekennzeichnet,**
**dass** die Axialanschläge (10, 11) als einen Steg (16) des Gehäusekastens (4) umfassender Doppelsteg (17, 18) oder Doppelformteil ausgebildet sind.

6. Kleinstantrieb nach einem der vorhergehenden Ansprüche,
**dadurch gekennzeichnet,**
**dass** die Axialanschläge (10, 11) über die korrespondierenden Stege (16, 17, 18) von Gehäusekasten (4) und Gehäusedeckel (5) und letztere verbindende Halteschrauben (19, 20) gesichert sind.

7. Kleinstantrieb nach einem der vorhergehenden Ansprüche,
**dadurch gekennzeichnet,**
**dass** die den Axialanschlag (10) im Bereich der Lagerbohrung (8) aufnehmende Ausnehmung (22) über angeschrägte Kanten (23, 24) verfügend ausgebildet ist.

8. Kleinstantrieb nach einem der vorhergehenden Ansprüche,
**dadurch gekennzeichnet,**
**dass** die der Spitze (27) der Motorachse (7) zugewandte Seite (28) des Axialanschlages (10) eine einen Keil vorgebende Schräge (29) aufweisend ausgebildet ist.

9. Kleinstantrieb nach einem der vorhergehenden Ansprüche,
**dadurch gekennzeichnet,**
**dass** der Axialanschlag (10) einen eine Federwirkung ergebenden Längsspalt (30) aufweist.

10. Kleinstantrieb nach Anspruch 8 oder Anspruch 9,
**dadurch gekennzeichnet,**
**dass** die der Spitze (27) der Motorachse (7) zugeordnete Seite (28) des Axialanschlages (10) eine die Spitze (27) der Motorachse (7) aufnehmende Mulde (31) aufweist.

## Claims

1. Microdrive, preferably an electrical microdrive (1) for automotive latches such as lateral door latches, tailgate latches or closure aids with a motor housing (12), a motor axis (7) and a housing (3) accommodating the motor housing (12) and the motor axis (7) and a worm gearbox (2), consisting of a housing case (4) and a housing lid (5), **characterized in that** the motor axis (7) is braced by means of a bearing bore (8) on the housing case (4) and is secured there by means of an axial stop (10), and that the axial stop (10) assigned to the bearing bore (8) is produced by the housing lid (5) and the bearing bore (8) from the outside (14) of the housing case (4).

2. Microdrive according to claim 1, **characterized in that** the axial stop (10) the motor axis (7) and the motor axial stop (11) are assigned to the housing lid (5).

3. Microdrive according to one of the previous claims, **characterized in that** the axial stops (10, 11) are executed with the housing lid (5) to form a constructional unit.

4. Microdrive according to claim 1, **characterized in that** the bearing bore (8) can be produced during injection molding of the housing case (4) by means of a cylindrical slider in the tool from the outside (14) of the housing case (4).

5. Microdrive according to one of the previous claims, **characterized in that** the axial stops (10, 11) are formed as a bridge (16) of the housing case (4) comprising a double bridge (17, 18) or a double molding.

6. Microdrive according to one of the previous claims, **characterized in that** the axial stops (10, 11) are secured by means of the corresponding bridges (16, 17, 18) of the housing case (4) and the housing lid (5) and latterly connecting holding screws (19, 20).

7. Microdrive according to one of the previous claims, **characterized in that** the recess (22) incorporating the axial stop (10) in the area of the bearing bore (8) is formed possessing beveled edges (23, 24).

8. Microdrive according to one of the previous claims, **characterized in that** the side (28) of the axial stop (10) turned towards the tip (27) of the motor axis (7) has a bevel (29) specifying a wedge.

9. Microdrive according to one of the previous claims, **characterized in that** the axial stop (10) has a lengthwise gap (30) producing a spring effect.

10. Microdrive according to claim 8 or claim 9, **characterized in that** the side (28) of the axial stop (10) assigned to the tip (27) of the motor axis (7) has a trough (31) incorporating the tip (27) of the motor axis (7).

## Revendications

1. Micromoteur, de préférence micromoteur électrique (1), pour serrure d'automobile comme serrures de portière latérale (7), serrures de hayon ou aides de fermeture avec un carter moteur (12), un axe moteur (7) et un boîtier (3) contenant le carter moteur (12) ainsi qu'un engrenage à vis sans fin (2) composé d'un boîtier de logement (4) et d'un couvercle de boîtier (5) **caractérisé en ce que** l'axe moteur (7) s'appuie par un trou de logement (8) au boîtier de logement (4) et qu'il y est assuré par une butée axiale (10) et que la butée axiale (10) affectée au trou de logement (4) est générée par le couvercle de boîtier (5) et le trou de logement (8) à partir du côté extérieur (14) du boîtier de logement.

2. Micromoteur selon la revendication 1 **caractérisé en ce que** la butée axiale (10) de l'axe moteur (7) et la butée axiale de moteur (11) sont affectées au couvercle de boîtier (5).

3. Micromoteur selon l'une des revendications précédentes **caractérisé en ce que** les butées axiales (10, 11) sont exécutées avec le couvercle de boîtier (5) pour former une unité de construction.

4. Micromoteur selon la revendication 1 **caractérisé en ce que** le trou de logement (8) peut être réalisé avec une coulisse cylindrique dans l'outil à partir du côté extérieur (14) du boîtier de logement (4) pendant l'injection du boîtier de logement (4).

5. Micromoteur selon l'une des revendications précédentes **caractérisé en ce que** les butées axiales (10, 11) sont formées sous forme une double traverse (17, 18) ou d'une double pièce moulée comprenant une traverse (16) du boîtier de logement (4).

6. Micromoteur selon l'une des revendications précédentes **caractérisé en ce que** les butées axiales (10, 11) sont assurées via les traverses correspondantes (16, 17, 18) par le boîtier de logement (4) et le couvercle de boîtier (5) et des vis de maintien (19, 20) associent ces derniers.

7. Micromoteur selon l'une des revendications précédentes **caractérisé en ce que** la cavité (22) logeant la butée axiale (10) dans la zone du trou de logement (8) est formée pour disposer de bords biseautés (23, 24)

8. Micromoteur selon l'une des revendications précédentes **caractérisé en ce que** le côté (28) de la butée axiale (10) tourné vers la pointe (27) de l'axe moteur (7) est formé en présentant une obliquité (29) déterminant une cale.

9. Micromoteur selon l'une des revendications précédentes **caractérisé en ce que** la butée axiale (10) présente une fente longitudinale (30) donnant un effet de ressort.

10. Micromoteur selon la revendication 8 ou la revendication 9 **caractérisé en ce que** le côté (28) de la butée axiale (10) tourné vers la pointe (27) de l'axe moteur (7) présente un creux (31) logeant la pointe (27) de l'axe moteur (7).
